## Europäisches Patentamt

## European Patent Office

## Office européen des brevets

(19)

(11) Veröffentlichungsnummer: **0 043 421
B1**

(12) **EUROPÄISCHE PATENTSCHRIFT**

(45) Veröffentlichungstag der Patentschrift:
02.10.85

(21) Anmeldenummer: 81103547.6

(22) Anmeldetag: 09.05.81

(51) Int. Cl.⁴: **G 02 B 6/38**

(54) Koppelvorrichtung für in Stecker gefasste Lichtwellenleiter und Verfahren zur Herstellung der Vorrichtung.

(30) Priorität: 04.07.80 DE 3025384
21.03.81 DE 3111267

(43) Veröffentlichungstag der Anmeldung:
13.01.82 Patentblatt 82/2

(45) Bekanntmachung des Hinweises auf die Patenterteilung:
02.10.85 Patentblatt 85/40

(84) Benannte Vertragsstaaten:
FR GB IT NL

(56) Entgegenhaltungen:
DE - A - 2 527 008
DE - A - 2 648 995
DE - U - 7 934 098
DE - U - 7 935 570

(73) Patentinhaber: Philips Kommunikations Industrie AG,
Thurn-und-Taxis-Strasse 10, D-8500 Nürnberg 10 (DE)

(72) Erfinder: Schmidt, Bernhard, Rehfeld 8,
D-5206 Neunkirchen1 (DE)
Erfinder: Günther, Wolfgang, Cäcilienweg 7,
D-2890 Nordenham 1 (DE)

(74) Vertreter: Patentanwälte Dr. Solf & Zapf,
Schlossbleiche 20 Postfach 13 01 13,
D-5600 Wuppertal 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung bezieht sich auf eine Koppelvorrichtung für in Stecker gefaßte Lichtwellenleiter gemäß dem Oberbegriff des Anspruchs 1.

Eine Koppelvorrichtung für in Stecker gefaßte Lichtleitfasern, mit einem hülsenförmigen, längs- und quergeschlitzten Klemmkörper und mit einem diesen Klemmkörper umgebenden Gehäuse ist bereits bekannt (DE-U-7 935 570). Hierbei ist der Klemmkörper derart gestaltet, daß er im Bereich des Längsschlitzes mit parallel verlaufenden Ansätzen versehen ist, deren Abstand voneinander der Längsschlitzbreite entspricht. Einer der beiden Ansätze ist quergeteilt, um eine individuelle Klemmung der beiden Lichtleitfaserstecker zu erreichen. Der Klemmkörper ist mit dem Gehäuse entweder durch Klebung oder durch Schrauben verbunden. Es hat sich nun herausgestellt, daß die Lösung zwar allen gestellten Anforderungen gerecht wird, jedoch mit einem verhältnismäßig großen Aufwand.

Der Erfindung liegt daher die Aufgabe zugrunde, eine Koppelvorrichtung für in Stecker gefaßte Lichtwellenleiter der eingangs geschilderten Art mit dem Ziel weiter zu entwickeln, den Aufwand im Bereich des klemmenden Teils zu vermindern und die Herstellungskosten zu senken.

Diese Aufgabe wird erfindungsgemäß durch die im kennzeichnenden Teil des Anspruchs 1 angegebenen konstruktiven Maßnahmen gelöst.

Der mit der Erfindung erzielte wesentliche Vorteil besteht darin, daß der eigentliche Klemmkörper in das Gehäuse integriert ist, d. h. einstückig mit dem Gehäuse verbunden ist, so daß die erfindungsgemäße Koppelvorrichtung nur aus wenigen Bauteilen besteht und damit einfach und kostengünstig aufgebaut ist.

Vorteilhafte Ausgestaltungen des Gegenstandes des Anspruchs 1 sind den Unteransprüchen zu entnehmen.

Hierbei erweist es sich als zweckmäßig, den Schlitz von der Ausnehmung über die Aussparung soweit zu verlängern, daß er die Ausnehmung im Abstand zu dieser in einem Halbkreis umschließt (Anspruch 2). Durch diese Ausführung des Schlitzes wird eine für die Klemmung optimale Elastizität erreicht.

Nun läßt sich diese Technik nicht nur für Einfachstecker verwenden, sondern ebenfalls für Mehrfachstecker (Anspruch 3). Die hiermit erzielten Vorteile bestehen darin, daß nunmehr auch eine äußerst platzsparende Koppeleinrichtung für mehrere Lichtwellenleiter von hoher Genauigkeit und Robustheit eingesetzt werden kann.

Auch ist es zweckmäßig, wenn man die vorgesehenen Schlitze in gewissen Bereichen zusammenfaßt, um eine günstige Raumaufteilung ohne Beeinträchtigung der geforderten Elastizität zu erreichen (Ansprüche 5 und 6). Die elastische Wirkung der zwischen den Schlitzen und den Ausnehmungen befindlichen Bereiche kann dadurch erhöht werden, daß die Schlitze wenigstens die Form eines halben Kreises aufweisen (Anspruch 7).

Was nun das Verfahren für die Herstellung einer Koppelvorrichtung betrifft, so ist hier insbesondere das Herstellen des Schlitzes durch Drahterosion zu erwähnen (Anspruch 8), oder aber auch das elektrochemische Herauslösen des Schlitzes mit einem der Kontur des Schlitzes entsprechenden Körper (Anspruch 9). Beide Verfahren tragen wesentlich dazu bei, daß die Herstellkosten für die erfindungsgemäße Koppelvorrichtung gesenkt werden können.

Ausführungsbeispiele der Erfindung sind in den Zeichnungen dargestellt und werden im folgenden näher beschrieben. Es zeigt

Fig. 1 eine Koppelvorrichtung für in Stecker gefaßte Lichtwellenleiter, im Ausschnitt,

Fig. 2 eine Koppelvorrichtung für vier Lichtwellenleiter, im Querschnitt.

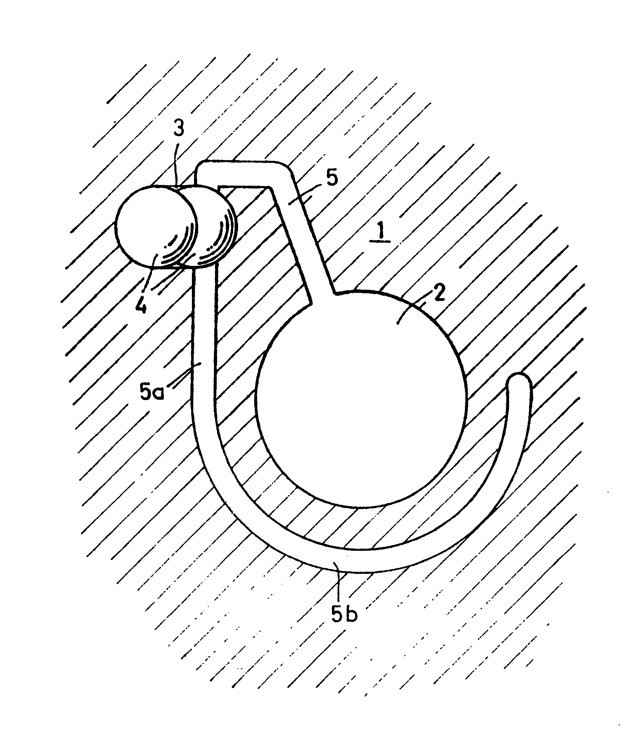

Fig. 1 zeigt einen Teil eines Gehäuses 1, das mit einer Ausnehmung 2 zur Aufnahme eines Lichtwellenleiterendes versehen ist. Ferner enthält das Gehäuse eine parallel zu der Ausnehmung 2 verlaufende Aussparung 3, die mittig getrennt ist. In dieser Aussparung befinden sich Druckkörper 4, die den von einer Schraubkappe am Ende der Koppelvorrichtung erzeugten Druck umlenken und indirekt über einen Teil des Gehäuses 1 auf die Lichtwellenleiterenden übertragen. Hierzu sind die Bereiche der Druckkörper für jedes Lichtwellenleiterende getrennt, so daß eine individuelle Klemmung erfolgen kann. Die notwendige Elastizität im Gehäuse wird durch einen mehrfach nach einer Seite gebogenen Schlitz 5 erzielt. Soll diese elastische Wirkung erhöht werden, kann der Schlitz 5 durch einen Abschnitt 5a verlängert werden, gegebenenfalls noch durch einen weiteren Abschnitt 5b, der die Ausnehmung 2 umschließt, hier in einem halbkreisförmigen Bogen im Abstand zur Ausnehmung.

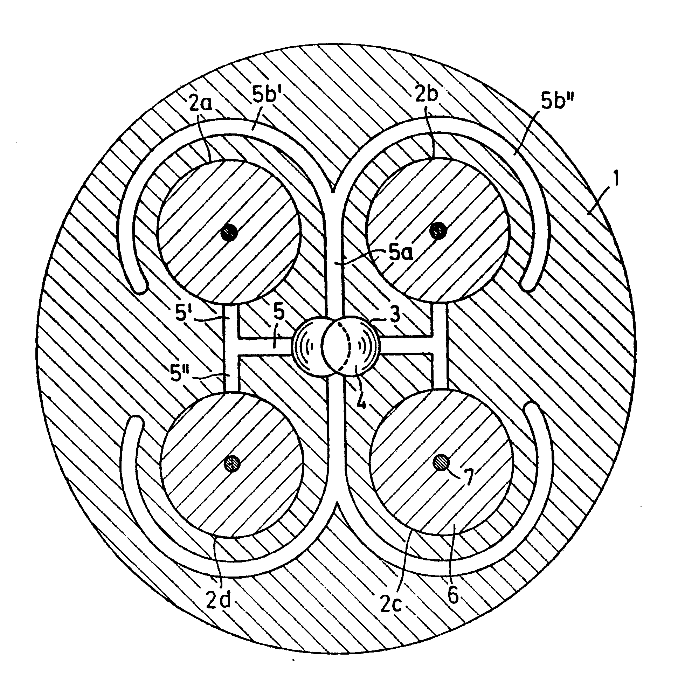

Nach Fig. 2 ist ein Gehäuse 1 vorgesehen, in dem sich Ausnehmungen 2a, b, c, d in regelmäßiger Anordnung befinden. Diese Ausnehmungen sind im wesentlichen zylindrisch gehalten und dienen der Aufnahme von Lichtwellenleiterenden. Im Zentrum des Gehäuses befindet sich eine Aussparung 3, in der Druckkörper 4 angeordnet sind. Von der Aussparung gehen verschiedene Schlitze aus, so Schlitze 5, die sich in Schlitze 5' und 5'' aufteilen und damit eine Verbindung zwischen der Aussparung und jeweils zwei Ausnehmungen herstellen. Damit sind sämtliche Ausnehmungen mit der Aussparung durch Schlitze verbunden. Von der Aussparung gehen jedoch noch zwei weitere Schlitze 5a aus, die sich jeweils in zwei Schlitze 5b' und 5b'' aufteilen und jeweils eine Ausnehmung wenigstens halbkreisförmig umschließen. Damit entsteht ein elastischer Bereich zwischen diesen Schlitzbereichen und der Ausnehmung, die mittels der Druckkörper einen Druck auf die Lichtwellenleiterenden ausüben. Diese Lichtwellenleiterenden sind in Steckerstiften 6 eingefaßt, wobei die eigentliche Faser mit 7 gekennzeichnet ist.

**Patentansprüche**

1. Koppelvorrichtung für in Stecker gefaßte Lichtwellenleiter mit einem Gehäuse (1) zur Aufnahme der Lichtwellenleiter und von Druckkörpern (4) zur indirekten Druckbeaufschlagung des Lichtwellenleiterendes über ein elastisches Klemmteil, mit mindestens einer durchgehenden, zylindrischen, zur Aufnahme der Lichtwellenleiterenden geeigneten und von dem Klemmteil teilweise begrenzten Ausnehmung (2) und mit einer zur Ausnehmung parallel verlaufenden, in der Länge mit der Ausnehmung übereinstimmenden, mittig unterbrochenen Aussparung (3) zur Aufnahme der Druckkörper (4), dadurch gekennzeichnet, daß das Klemmteil mit dem Gehäuse (1) einstückig verbunden ist und von der Ausnehmung (2) selbst sowie einem von der Ausnehmung ausgehenden, mit der Aussparung (3) verbundenen und von dieser weiterführenden, im Abstand zur Ausnehmung verlaufenden und die Ausnehmung mindestens teilweise umgebenden Schlitz (5a, 5b, 5b', 5b") begrenzt wird.

2. Koppelvorrichtung nach Anspruch 1, dadurch gekennzeichnet, daß der Schlitz (5, 5', 5") die zylindrische Ausnehmung (2, 2a, 2b, 2c, 2d) in einem Halbkreis umschließt.

3. Koppelvorrichtung nach einem der Ansprüche 1 oder 2, dadurch gekennzeichnet, daß das Gehäuse (1) im Durchmesser derart bemessen ist, daß mehrere durchgehende, zylindrische zur Aufnahme von Lichtwellenleiterenden geeignete Ausnehmungen (2a, b, c, d) vorgesehen sind, die in einer regelmäßigen Form innerhalb des Gehäuses angeordnet sind, daß die Aussparung (3) für die Druckkörper (4) in die Achse des Gehäuses verlegt ist, und daß die Aussparung einerseits mit jeder Ausnehmung durch einen Schlitz (5, 5', 5") verbunden ist und daß andererseits ein Schlitz (5a, b, b") von der Aussparung aus jede Ausnehmung im Abstand teilweise umgibt.

4. Koppelvorrichtung nach Anspruch 3, dadurch gekennzeichnet, daß die Ausnehmungen (2a, b, c, d) in einem regelmäßigen Viereck angeordnet sind.

5. Koppelvorrichtung nach einem der Ansprüche 3 oder 4, dadurch gekennzeichnet, daß nahe der Aussparung für je zwei Ausnehmungen (2a, d bzw. 2b, c) ein Schlitz (5) vorgesehen ist, der im weiteren Verlauf geteilt (5', 5") und jeweils zu einer der Ausnehmungen geführt ist.

6. Koppelvorrichtung nach einem der Ansprüche 3 bis 5, dadurch gekennzeichnet, daß die jeweils zwei Ausnehmungen (2a, b bzw. 2c, d) umgebenden Schlitze (5b', 5b") im Bereich der engsten Stelle zwischen diesen Ausnehmungen zu einem Schlitz (5a) vereinigt und zur Aussparung (3) geführt sind.

7. Koppelvorrichtung nach Anspruch 3, dadurch gekennzeichnet, daß die um die Ausnehmungen (2a, b, c, d) geführten Schlitze (5b', 5b") wenigstens in Form eines halben Kreises ausgebildet sind.

8. Verfahren zur Herstellung einer Koppelvorrichtung nach einem der Ansprüche 1 bis 7, dadurch gekennzeichnet, daß das Gehäuse (1) zunächst mit den Ausnehmungen (2 bzw. 2a, b, c, d) und der Aussparung (3) versehen wird und anschließend der Schlitz oder die Schlitze (5) durch Drahterosion hergestellt wird bzw. werden.

9. Verfahren zur Herstellung einer Koppelvorrichtung nach einem der Ansprüche 1 bis 7, dadurch gekennzeichnet, daß das Gehäuse (1) zunächst mit den Ausnehmungen (2 bzw. 2a, b, c, d) und der Aussparung (3) versehen wird und anschließend der Schlitz oder die Schlitze (5) mittels eines der Kontur des Schlitzes entsprechenden Körpers elektrochemisch herausgelöst wird bzw. werden.

**Claims**

1. A coupling device for optical waveguides mounted in plugs, comprising a housing (1) for accommodating the waveguides and pressing bodies (4) for indirectly exerting pressure on the optical waveguide end via an elastic clamping portion, comprising a cylindrical throughbore (2) which is suitable for accommodating the optical waveguide ends and which is at least partly bounded by the clamping portion, and also comprising a hole (3) for accommodating the pressing bodies (4) which extends parallel to the bore, has the same length as the bore and is interrupted in the middle, characterized in that the clamping portion is formed so as to be integral with the housing (1) and is bounded by the bore (2) itself as well as by a slot (5a, 5b, 5b', 5b") which commences at the bore and which connects with the hole (3) and extends further therefrom, said slot being provided at a distance from the bore and enclosing the bore at least partly.

2. A coupling device as claimed in claim 1, characterized in that the slot (5, 5', 5") encloses the cylindrical bore (2, 2a, 2b, 2c, 2d) semicircularly.

3. A coupling device as claimed in claim 1 or 2, characterized in that the diameter of the housing (1) is proportioned so that there are provided a plurality of cylindrical through-bores (2a, b, c, d) which are suitable for accommodating optical waveguide ends, said bores being arranged in a regular pattern in the housing, the hole (3) for the pressing bodies (4) being situated at the axis of the housing, the hole on the one side connecting with each bore via a slot (5, 5', 5") whilst on the other side a slot (5a, b, b") which commences at the hole partly encloses each bore at a distance therefrom.

4. A coupling device as claimed in claim 3, characterized in that the bores (2a, b, c, d) are arranged in a regular quadrangle.

5. A coupling device as claimed in claim 3 or 4, characterized in that in the vicinity of the hole there is provided a slot (5) for each time two bores (2a, d or 2b, c), said slot being divided (5', 5") thereafter and connecting with each time one of the bores.

6. A coupling device as claimed in any one of the claims 3 to 5, characterized in that the slots (5b', 5b") which enclose each time two bores (2a, b and 2c, d) are combined at the location of the shortest distance between these bores so as to form one slot (5a) which extends to the hole (3).

7. A coupling device als claimed in claim 3, characterized in that the slots (5b', 5b") extending about the bores (2a, b, c, d) are shaped so as to be at least semicircular.

8. A method of manufacturing a coupling device as claimed in any one of the claims 1 to 7, characterized in that the housing (1) is first provided with the bores (2 or 2a, b, c, d) and the hole (3), after which the slot (slots) (5) is (are) formed by wire eroding.

9. A method of manufacturing a coupling device as claimed in any one of the claims 1 to 7, characterized in that the housing (1) is first provided with the bores (2 or 2a, b, c, d) and the hole (3), after which the slot (slots) (5) is (are) formed by electrochemical dissolving by means of a member having a contour conforming to the shape of the slot.

## Revendications

1. Dispositif de couplage de guides de lumière montés dans des fiches, muni d'un boîtier (1) servant à recevoir les guides de lumière et de corps de pression (4) servant à exercer indirectement, à travers une partie de serrage élastique, une pression sur l'extrémité de guide de lumière, dispositif de couplage qui présente, d'une part, au moins une traversée cylindrique (2) convenant pour recevoir les extrémités de guides de lumière et limitée partiellement par la partie de serrage et, d'autre part, une ouverture (3) parallèle à la traversée et correspondant en longueur à cette traversée, ouverture qui est interrompue dans son centre et sert à recevoir les corps de pression (4), caractérisé en ce que la partie de serrage est solidaire du boîtier (1) et est limitée par la traversée (2) elle-même ainsi que par une fente (5a, 5b, 5b', 5b") partant de la traversée et communiquant avec l'ouverture (3), fente qui se prolonge à partir de cette ouverture en direction de la traversée tout en restant à distance de celle-ci, et qui entoure la traversée au moins partiellement.

2. Dispositif de couplage selon la revendication 1, caractérisé en ce que la fente (5, 5', 5") entoure la traversée cylindrique (2, 2a, 2b, 2c, 2d) souivant un demi-cercle.

3. Dispositif de couplage selon l'une des revendications 1 et 2, caractérisé en ce que le diamètre du boîtier (1) est tel qu'il soit prévu plusieurs traversées continues et cylindriques (2a, b, c, d) convenant pour recevoir des d'extrémités de guides de lumière, traversées qui sont disposées dans le boîtier suivant une configuration régulière, en ce que l'ouverture (3) pour les corps de pression (4) est située au centre du boîtier et en ce que, d'une part, une fente (5, 5', 5") fait communiquer l'ouverture avec chacune des traversées et, d'autre part, une fente (5a, b, b") partant de l'ouverture entoure partiellement et à distance chacune des traversées.

4. Dispositif de couplage selon la revendication 3, caractérisé en ce que les traversées (2a, b, c, d) sont disposées suivant un quadrilatère régulier.

5. Dispositif de couplage selon l'une des revendications 3 et 4, caractérisé en ce qu'à proximité de l'ouverture, est prévue une fente (5) pour chaque paire de traversées (2a, d et 2b, c), fente qui, à quelque distance de l'ouverture se divise en deux parties (5', 5") coduisant chacune à l'une des traversées de la paire.

6. Dispositif de couplage selon l'une des revendications 3 à 5, caractérisé en ce que les fentes (5b', 5b") entourant chaque paire de traversées (2a, b et 2c, d) se réunissent en une seule fente (5a) dans la partie la plus étroite entre ces traversées pour déboucher ensuite dans l'ouverture (3).

7. Dispositif de couplage selon la revendication 3, caractérisé en ce que les fentes (5b', 5b") entourant les traversées (2a, b, c, d) affectent la forme d'un demi-cercle.

8. Procédé de réalisation d'un dispositif de couplage selon l'une des revendications 1 à 7, caractérisé en ce qu'on pratique d'abord les traversées (2 ou 2a, b, c, d) et l'ouverture (3) dans le boîter (1) et en ce qu'on forme ensuite la fente ou les fentes (5) par usinage par décharge électrique.

9. Procédé de réalisation d'un dispositif de couplage selon l'une des revendications 1 à 7, caractérisé en ce qu'on pratique d'abord les traversées (2 ou 2a, b, c, d) et l'ouverture (3) dans le boîtier (1) et en ce qu'on forme ensuite la fente ou les fentes (5) par voie électrochimique au moyen d'un corps correspondant au contour de la fente.